# EUROPÄISCHE PATENTSCHRIFT

(11) **EP 1 597 961 B1**
(45) Veröffentlichungstag und Bekanntmachung des Hinweises auf die Patenterteilung: **09.07.2008**
(21) Anmeldenummer: 05009991.0
(22) Anmeldetag: 07.05.2005
(51) Int. Cl.: A01D 51/00

(54) **Sauganordnung für eine Bodenfläche**
Suction device for a soil surface
Dispositif d'aspiration pour une surface de sol

(30) Priorität: 22.05.2004 DE 102004025197
(43) Veröffentlichungstag der Anmeldung: 23.11.2005
(73) Patentinhaber: Andreas Stihl AG & Co. KG, 71336 Waiblingen (DE)
(72) Erfinder: Maier, Georg, Dr., Ing., 71394 Kernen i.R. (DE); Mang, Harald, Dipl.-Ing., 71364 Winnenden (DE); Langhans, Klaus, Dipl.-Ing., Dr., 71364 Winnenden (DE); Layher, Wolfgang, Dipl.-Ing., 71336 Waiblingen (DE); Gaese, Uwe, Dipl.-Ing., Dr., 70563 Stuttgart (DE); Schütt, Jörg, Dipl.-Ing., 71334 Waiblingen (DE)
(74) Vertreter: Wasmuth, Rolf

(56) Entgegenhaltungen:
- WO-A-20/04014120
- US-A- 3 460 327
- US-A- 4 499 713
- US-A- 5 499 493

## Beschreibung

Die Erfindung betrifft eine Sauganordnung, zum Aufsammeln von Sammelgut von einer Bodenfläche, z. B. zum Aufsammeln von Erntegut nämlich Kleinfrüchten wie Nüssen, Beeren, Oliven, Kaffeekirschen oder dgl. vom Boden nach dem Oberbegriff des Anspruchs 1.

Beim Ernten von Kleinfrüchten wie Oliven ist es üblich, die Früchte von den Bäumen zu schütteln oder zu schlagen und dann vom Boden aufzusammeln. Hierzu sind Sauggeräte bekannt, die ähnlich einem Staubsauger das am Boden befindliche Gut aufnehmen. Nachteilig ist, daß in dem Sammelbehälter nicht nur das aufzusammelnde Erntegut, sondern auch Laub, Moos, Gras oder dgl. Fremdkörper aufgenommen wird, so daß ein häufiges Entleeren notwendig ist. Dabei muß dann - meist von Hand - das Erntegut von den unerwünschten Fremdkörpern selektiert werden.

Es sind auch Sauggeräte bekannt, bei denen das Erntegut zusammen mit Laub, Gras oder dgl. Fremdkörper derart in einen Sammelbehälter geführt wird, daß die meist leichteren Fremdkörper ausgeblasen werden und nur das Erntegut zurückgehalten wird. Derartige Geräte sind aber aufwendig und schwer, was für den das Gerät tragenden Benutzer ermüdend ist.

Aus der US-A-3,460,327 ist eine Sauganordnung bekannt, deren Saugmund eine "Nulldruckzone" aufweist, deren vertikale Lage durch Ausstellen eines umlaufenden Randes variiert werden kann. Dabei dienen Blasluftströme dem Wegblasen von Material, welches nicht aufgesaugt werden soll. Durch Absenken des Saugmundes über das aufzunehmende Sammelgut kann dieses die Nulldruckzone passieren und wird dann über den Saugschlauch aufgenommen. Der Benutzer muß also den Saugmund gezielt über das aufzunehmende Gut stülpen, bevor dieses eingesaugt wird.

Aus der US-A-5,499,493 geht eine Sammeleinrichtung hervor, bei der die aufzusammelnden Früchte über rechenartige Zinken vom Boden aufgenommen und - auf den Zinken - in Richtung zum Saugmund der Sauganordnung gefördert werden. Ein im Bereich der Zinkenspitzen vorgesehener Blasstrom ist von der Saugmündung weg nach unten zum Boden gerichtet und bildet eine Luftbarriere, um einmal von den Zinken aufgenommene Früchte auf den Zinken zu halten.

Der Erfindung liegt die Aufgabe zugrunde, eine bekannte Sauganordnung derart weiterzubilden, daß gezielt das gewünschte Sammelgut aufgenommen wird.

Die Aufgabe wird erfindungsgemäß nach den Merkmalen des Anspruchs 1 gelöst.

Der aus der Blasdüse austretende Blasluftstrom liegt mit Abstand zur Saugmündung und ist auf die Bodenfläche im Bereich der Saugmündung gerichtet, so daß das aufzunehmende Sammelgut durch den Blasluftstrom in Richtung auf die Saugmündung gefördert wird, wodurch ein leichtes Aufnehmen des Erntegutes über die Saugmündung gewährleistet ist. Insbesondere in tiefem Gras oder aus Bodenvertiefungen kann der Blasluftstrom das aufzusammelnde Sammelgut pneumatisch anheben, so daß überhaupt erst eine Aufnahme mit einem Sauggerät möglich wird. Im Sammelbehälter wird sich daher im wesentlichen nur das Sammelgut sammeln, so daß der Füllungsgrad mit Sammelgut gegenüber herkömmlichen Saugmethoden signifikant erhöht ist, wodurch die Effizienz der Saugaufnahme verbessert ist. Da der Blasluftstrom der Blasdüse zumindest teilweise in Richtung auf die Saugmündung ausgerichtet ist, wird der Blasluftstrom nicht nur Laub, Gras, Moos oder dgl. wegblasen, sondern zugleich das Erntegut in Richtung auf die Saugmündung des Saugrohres fördern. Aufgrund der mehreren Blasdüsen und einer Anordnung, wonach sich zwei Blasdüsen bezogen auf den Arbeitsbereich einander etwa gegenüberliegen, ist eine gute Funktionalität gegeben.

Ist der zwischen dem Blasluftaustritt und der Saugmündung liegende Arbeitsbereich zumindest über einen Teilbereich von oben einsehbar, ist dem Benutzer eine einfache, zielgerichtete Führung der Sauganordnung möglich. Ist der Teilbereich nach oben offen, können zudem leichtere Fremdkörper von einem schwereren Sammelgut, vorzugsweise einem Erntegut wie Kleinfrüchte, z. B. Kastanien, Nüsse, Beeren, Oliven, Kaffeekirschen oder dgl. weggeblasen werden, so daß über die Saugöffnung im wesentlichen das Erntegut aufgenommen wird. Der Füllungsgrad des Sammelbehälters mit Erntegut ist verbessert, so daß bei einer Entleerung des Sammelbehälters eine manuelle Selektierung des Erntegutes von Fremdkörpern meist entfallen kann.

Es kann vorteilhaft sein, den offenen Teilbereich über ein Verschlußelement wie einen Schieber o. dgl. ganz oder teilweise verschließbar auszubilden, so daß die auf der Bodenfläche durch den Blasluftstrom mögliche Selektierung des aufzunehmenden Sammelgutes von den wegzublasenden Fremdkörpern einstellbar ist. Wird das Verschlußelement transparent ausgeführt, bleibt auch bei geschlossenem Teilbereich der Blick auf die Bodenfläche frei, was die Führung der Sauganordnung erleichtert. Bei vollständig geschlossenen Teilbereichen kann die Sauganordnung als Saugreiniger für Bodenflächen eingesetzt werden.

Bevorzugt liegt der Saugmündung eine Blasdüse unmittelbar gegenüber, wodurch die unterstützende Förderung von Kleinfrüchten zur Aufnahme durch die Saugmündung verbessert werden kann.

Die Eintrittsfläche der Saugmündung und die Bodenfläche liegen in einem Winkel von weniger als 70° zueinander, vorzugsweise etwa 45°, wodurch ein effektives Arbeiten mit einem hohen Aufnahmegrad gegeben ist.

Bevorzugt haben die bezogen auf den Arbeitsbereich einander etwa gegenüberliegenden Blasdüsen eines Paares jeweils gleiche Ausrichtung, vorzugsweise liegen sie mit gleichen Winkeln zur Bodenfläche. Dadurch wird erreicht, daß die durch das Auftreffen des Blasluftstroms auf die Bodenfläche auftretende Reaktionskraft der einen Düse durch den Blasluftstrom der anderen Düse kompensiert wird. Die erfindungsgemäße Sauganordnung läßt sich einfach handhaben. Kreuzen sich die Blasluftströme eines Paares vorzugsweise etwa auf einer Mittelebene des Arbeitsbereiches der Sauganordnung oder nahe dem Zentrum der Saugmündung, so erhalten die sich treffenden Luftströme eine Richtungskomponente nach oben, insbesondere senkrecht nach oben, wodurch leichte Teile aufgewirbelt werden.

Es kann zweckmäßig sein, die Blasluftdüsen mit unterschiedlichen Winkeln zur Bodenfläche anzuordnen, um ein unterschiedlich tiefes Eindringen der Blasluft z.B. im Gras zu ermöglichen.

In einer vorteilhaften Ausführungsform sind mehrere Blasdüsen auf einem die Saugmündung als Zentrum aufweisenden Kreis angeordnet, wobei alle Blasdüsen des Kreises zweckmäßig unter einem gleichen Winkel zur Bodenfläche liegen. Alle Düsen fördern zum Zentrum des Kreises, in dem die Saugmündung des Saugrohres angeordnet ist. Über offene Fenster innerhalb des Kreises fliegt das leichte Gut davon; nur die schwereren Kleinfrüchte bleiben unter der Saugmündung liegen und werden vom Saugluftstrom aufgenommen.

Um dem Benutzer ein kräfteschonendes Führen der erfindungsgemäßen Sauganordnung zu ermöglichen, ist vorgesehen, daß das Saugrohr und die Blasdüsen an einem gemeinsamen Tragkörper gehalten sind und der Tragkörper einen auf die Bodenfläche aufsetzbaren Abstandshalter aufweist. Der Abstandshalter kann in Form von Lappen, eines Gleitkörpers, insbesondere eines Gleitschuhs, oder auch in Form einer Laufrolle ausgebildet sein, wobei die Drehachse einer Laufrolle parallel zur Bodenfläche und vorzugsweise etwa parallel zum Saugrohr liegt. Dabei ist die Laufrolle axial ballig gestaltet, so daß nicht nur in Drehrichtung eine einfache Bewegung möglich ist, sondern auch in Richtung der Drehachse selbst, in der die Laufrolle dann als Gleitkufe arbeitet.

In besonderer Weiterbildung der Erfindung ist der Winkel zwischen dem Saugrohr und der die Blasdüse aufweisenden Anordnung verstellbar, so daß die Sauganordnung auch bei Änderung des Winkels des Saugrohres mit ihrer Längsachse parallel zur Bodenfläche verläuft. Unabhängig von der Größe eines Benutzers, der die Sauganordnung am Saugrohr trägt, ist eine Parallelität der Sauganordnung zur Bodenfläche gewährleistet.

Weitere Merkmale der Erfindung ergeben sich aus den weiteren Ansprüchen, der Beschreibung und der Zeichnung, in der nachstehend im einzelnen beschriebene Ausführungsbeispiele dargestellt sind. Es zeigen:
- Fig. 1: eine perspektivische Ansicht auf eine Sauganordnung in Form einer Gabeldüse,
- Fig. 2: eine Seitenansicht der Sauganordnung nach Fig. 1,
- Fig. 3: eine Draufsicht auf die Sauganordnung nach Fig. 1,
- Fig. 4: eine Ansicht einer Sauganordnung nach Fig. 1 mit einem Gleitschuh als Abstandshalter,
- Fig. 5: eine Seitenansicht der Sauganordnung nach Fig. 4,
- Fig. 6: eine perspektivische Ansicht einer geschlossenen Gabeldüse in einem der offenen Gabeldüse nach Fig. 1 entsprechenden Aufbau,
- Fig. 7: eine Draufsicht auf die geschlossene Gabeldüse nach Fig. 6,
- Fig. 8: eine perspektivische Ansicht einer Runddüse,
- Fig. 9: eine Seitenansicht der Runddüse nach Fig. 8,
- Fig. 10: eine Ansicht von unten auf die Runddüse nach Fig. 8,
- Fig. 11: eine Frontansicht der Runddüse nach Fig. 8,
- Fig. 12: eine Draufsicht auf die Runddüse nach Fig. 8,
- Fig. 13: eine perspektivische Explosionsdarstellung der Verbindung zwischen Saugrohr und Trageinrichtung,
- Fig. 14: eine perspektivische Darstellung der Trageinrichtung mit einem das Saugrohr festlegenden Deckel.

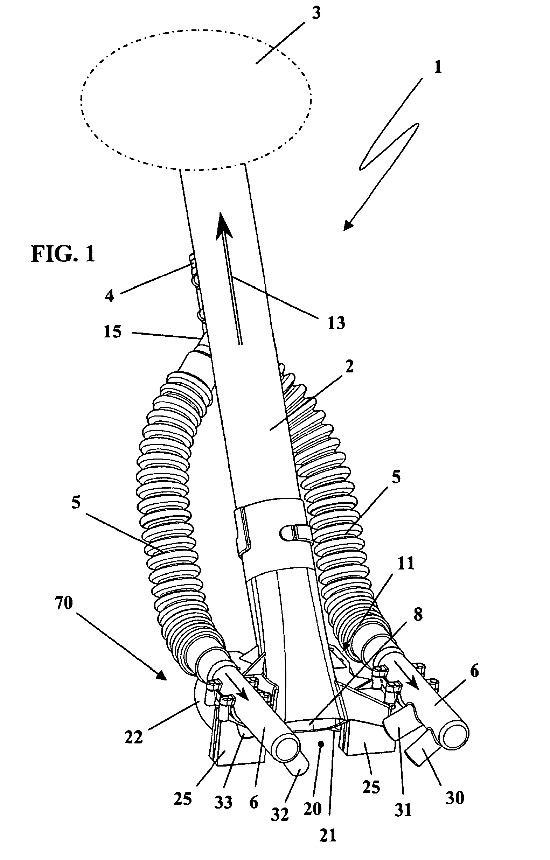

Die in Fig. 1 gezeigte Sauganordnung 1 dient dem Aufsaugen von Sammelgut wie losen Teilen von einer Bodenfläche 7. Die Sauganordnung 1 ist bevorzugt zum Aufsaugen von Sammelgut, nämlich Erntegut wie Kleinfrüchten, beispielsweise Kastanien, Nüssen, Beeren, Oliven, Kaffeekirschen oder dgl. von einer Bodenfläche ausgebildet. Die erfindungsgemäße Sauganordnung 1 kann aber auch zur effektiven Reinigung von Bodenflächen eingesetzt werden.

Die Sauganordnung 1 besteht im wesentlichen aus einem Saugrohr 2, über das das aufgesaugte Sammelgut einem Sammelbehälter 3 zugeführt ist, wie er in Fig. 1 schematisch dargestellt ist.

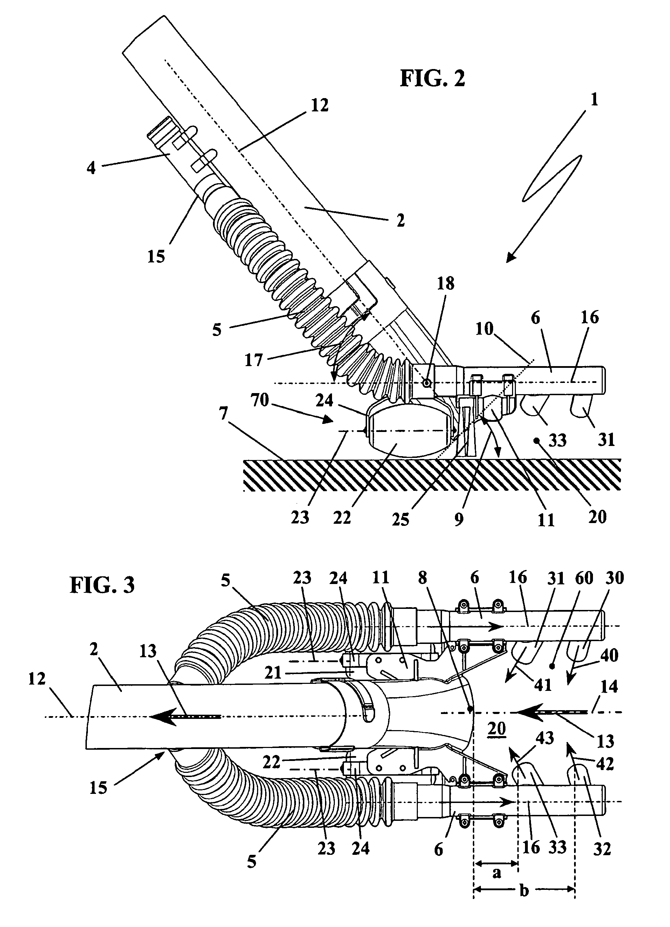

Wie Fig. 2 zeigt, ist am Saugrohr 2 ein Blasrohr 4 befestigt, welches über einen T-förmigen Stutzen 15 in zwei Luftkanäle 5, z.B. Luftschläuche verzweigt, die in endseitig geschlossene Endrohre 6 münden. Die Endrohre 6 liegen - vgl. Fig. 2 - in der überwiegenden Betriebshaltung der Sauganordnung 1 mit ihren Längsachsen 16 etwa parallel zur Bodenfläche 7, von der das Sammelgut aufzulesen ist. Die Lage der Längsachsen 16 entspricht somit auch der Lage der Sauganordnung 1 zur Bodenfläche 7.

Das Saugrohr 2 weist eine vordere Saugmündung 8 auf, die im gezeigten Ausführungsbeispiel unter einem Winkel 9 von etwa 45° zur Bodenfläche 7 liegt. Zweckmäßig liegt die Ebene 10 der Eintrittsfläche der Saugmündung 8 unter einem Winkel von kleiner etwa 70°, vorzugsweise etwa 45° zur Bodenfläche 7. Die Endrohre 6 erstrecken sich rechts und links neben dem Saugrohr 2 und überragen die Saugmündung 8 des Saugrohrs 2 (Fig. 3).

Das Saugrohr 2 und die Endrohre 6 mit den Luftkanälen 5 sind an einem Tragkörper 11 gemeinsam gehalten. Die Längsachsen 16 der Endrohre 6 und die Längsachse 12 des Saugrohres 2 liegen - in Draufsicht nach Fig. 3 - etwa parallel zueinander, wobei die Längsachse 12 des Saugrohres 2 mit der durch die Längsachsen 16 definierten Ebene der Sauganordnung 1 einen Winkel 17 von etwa 45° einschließt (Fig. 2). Bevorzugt ist das Saugrohr 2 relativ zum Tragkörper 11 um eine quer zu den Längsachsen 12 und 16 liegende, etwa parallel zur Bodenfläche 7 ausgerichtete Drehachse 18 verschwenkbar, so daß die Sauganordnung 1 selbst auch bei einer Änderung des Winkels des Saugrohres 2 zur Bodenfläche 7 mit ihren Längsachsen 16 etwa parallel zur Bodenfläche 7 verläuft. Unabhängig von der Größe eines Benutzers, der die Sauganordnung am Saugrohr 2 trägt, ist eine Parallelität der Sauganordnung 1 zur Bodenfläche 7 gewährleistet.

Zwischen den die Saugmündung 8 überragenden Endrohren 6 und der Saugmündung 8 selbst ist ein Arbeitsbereich 20 der Sauganordnung 1 definiert. Der Arbeitsbereich 20 liegt unterhalb der durch die Längsachsen 16 definierten Ebene, die etwa parallel zur Bodenfläche 7 liegt. Aus diesem Arbeitsbereich 20 strömt - wie Fig. 3 zeigt - Saugluft in Pfeilrichtung 13 in das Saugrohr 2 ein und zum Sammelbehälter 3 (Fig. 1). Gleichzeitig wird in den Arbeitsbereich 20 Blasluft eingeblasen. Hierzu weisen die Endrohre 6 Blasdüsen 30, 31, 32, 33 auf, deren jeweiliger Blasluftstrom 40, 41, 42 und 43 auf die Bodenfläche des Arbeitsbereiches 20 gerichtet ist, der in dem Bereich vor der Saugmündung 8 liegt. Die aus den Blasdüsen 30 bis 33 austretenden Blasluftströme 40 bis 43 sind vorteilhaft zumindest teilweise in Richtung auf die Saugmündung 8 ausgerichtet. Wird der Arbeitsbereich 20 durch eine gedachte senkrechte Mittelebene 14 in zwei symmetrische Hälften geteilt, so liegt die Saugmündung 8 bevorzugt symmetrisch zur Mittelebene 14. Auch die Endrohre 6 mit den Blasdüsen 30 bis 33 sind derart angeordnet, daß sie - in Draufsicht nach Fig. 3 - symmetrisch zur Mittelebene 14 des Arbeitsbereiches 20 liegen. Bezogen auf die Mittelebene 14 liegt jeder Blasdüse 30, 31 eine Blasdüse 32 bzw. 33 direkt gegenüber. Dabei kann es vorteilhaft sein, die Ausrichtung der Blasdüsen jeweils paarweise vorzusehen, so daß die bezogen auf die Mittellinie 14 einander gegenüberliegenden Blasdüsenpaare 30, 32; 31, 33 jeweils in dem gleichen Winkel zur Bodenfläche 7 und zur Saugöffnung 8 ausgerichtet liegen. Volumenmäßig ist die Blasluft zur Mittelebene 14 etwa symmetrisch aufgeteilt. Die sich unterhalb der durch die Längsachsen 16 definierten Ebene treffenden Luftströme 40 und 42 und/oder 41 und 43 erhalten dadurch eine Richtungskomponente nach oben, vorzugsweise senkrecht nach oben. Leichte Teile werden aufgewirbelt. Ferner können auch die auftretenden Reaktionskräfte bezogen auf die Mittelebene 14 kompensiert werden, so daß ein leichtes Führen der Sauganordnung 1 gegeben ist. Insbesondere der Kreuzungsbereich zweier Blasluftströme liegt bevorzugt auf der Mittelebene 14, so daß die senkrechte Richtungskomponente keine Kippbewegung um die Saugrohrachse 12 auslöst; vielmehr kann die senkrecht nach oben gerichtete Richtungskomponente dem Gewicht der Saugrohranordnung entgegenwirken, wodurch eine leichtere Handhabung erzielt ist.

Wie sich aus den Fig. 1 bis 3 ergibt, liegen die Blasluftaustritte der Blasdüsen 30 bis 33 bezogen auf die Längserstreckung des Saugrohres 2 mit einem in der Horizontalen zur Bodenfläche 7 gemessenen Abstand a bzw. b zur Saugöffnung 8. So haben die saugmündungsnahen Blasdüsen 31, 33 einen Abstand a zur Saugmündung 8, während die entfernt liegenden Blasdüsen 30 und 32 einen größeren Abstand b zur Saugmündung 8 aufweisen. Der Arbeitsbereich 20 ist in diesem Ausführungsbeispiel nach oben offen, d.h. ein durch das Saugrohr 2 bzw. die Saugmündung 8 und die Endrohre 6 begrenztes Fenster 60 ist offen. Die durch die Blasdüsen 30 bis 33 zugeführte Blasluft wird zum Teil über die Saugmündung 8 abgesaugt und zum Teil nach oben durch das Fenster 60 und nach vorne abströmen. Durch diese offene Bauweise wird erreicht, daß Laub, Gras, oder andere Hindernisse, die das Erntegut bedecken könnten, weggeblasen werden. Das aufzunehmende Sammelgut kann von dem Saugluftstrom des Saugrohres 2 sicher erfaßt und aufgenommen werden. Die Blasluftdüsen 30 bis 34 haben darüber hinaus den Vorteil, daß sie das Sammelgut auch aus tiefem Gras oder aus Vertiefungen am Boden auf ein Luftpolster anheben können, so daß das Absaugen von Erntegut auch unter ungünstigen Bedingungen möglich ist. Da im wesentlichen nur das aufzunehmende Sammelgut aufgesaugt wird, ist im Sammelbehälter 3 überwiegend das Sammelgut enthalten und nur ein geringer Anteil von Fremdkörpern. Dies hat den Vorteil, daß das Volumen des Sammelbehälters zum Aufnehmen des Sammelgutes effektiver genutzt werden kann.

Um dem Benutzer eine einfache Führung der Sauganordnung 1 zu ermöglichen, ist vorgesehen, am gemeinsamen Tragkörper 11 einen auf die Bodenfläche 7 aufsetzbaren Abstandshalter 70 zu befestigen. Der Abstandshalter 70 liegt außerhalb des Arbeitsbereiches 20 unterhalb des Saugrohres 2 nahe der Saugmündung 8. Im Ausführungsbeispiel nach den Fig. 1 bis 3 sind als Abstandshalter Laufrollen 21 und 22 vorgesehen, die um eine zur Bodenfläche 7 parallele Drehachse 23 drehbar gelagert sind. Die Drehachsen 23 liegen dabei - wie insbesondere die Draufsicht nach Fig. 3 zeigt - parallel zu den Längsachsen der Endrohre 6 bzw. zur Längsachse 12 des Saugrohres 2. Wie dargestellt, sind auf beiden Seiten der Mittellinie 14 je eine Laufrolle 21, 22 in einem Bügel 24 gehalten, der an dem Tragkörper 11 festgelegt ist. Um nicht nur eine leichte rollende seitliche Hin- und Herbewegung zu gewährleisten, sondern auch eine Vorwärtsbewegung mit wenig Kraftaufwand ausführen zu können, sind die Laufrollen 22 in Achsrichtung ballig ausgeführt, so daß die Laufrollen 21, 22 in Richtung der Drehachse 23 als Gleiter bzw. Gleitkufen dienen.

Um die Schmutzbelastung der drehbaren Laufrollen 21 und 22 gering zu halten, ist zwischen den Laufrollen 21 und 22 und dem Arbeitsbereich 20 eine flexible Sperre 25 in Form von Bürsten, flexiblen Lappen oder dgl. vorgesehen. Diese Lappen 25 aus einem flexiblen Material können selbst auch Abstandshalter 70 bilden und als einzige Maßnahme zur Abstandswahrung vorgesehen sein.

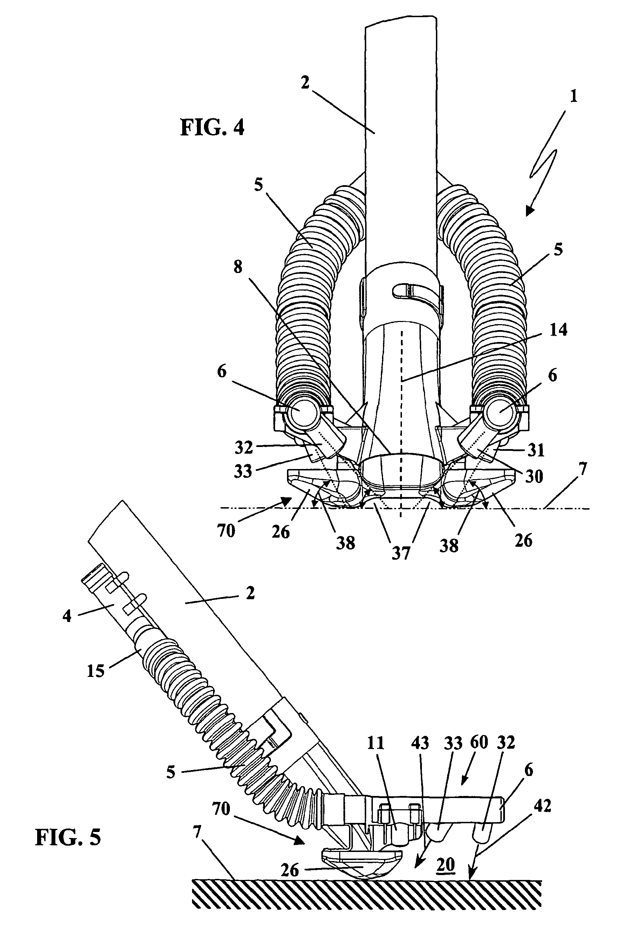

Im Ausführungsbeispiel nach Fig. 4 und 5 ist eine Sauganordnung gezeigt, die der nach den Fig. 1 bis 3 im Aufbau identisch entspricht. Anstelle von Laufrollen sind im Ausführungsbeispiel nach den Fig. 4 und 5 Gleitkufen vorgesehen, die sich - wie die Frontansicht in Fig. 4 zeigt - beidseitig der Saugöffnung 8 unterhalb des Saugrohres 2 außerhalb des Fensters 60 erstrecken. Die Kufen 26 sind derart ausgebildet, daß die Sauganordnung 1 sowohl seitlich als auch leicht nach vorne und zurück zu bewegen ist und auf der Bodenfläche 7 gleitet. Die Formgestaltung ist derart, daß die Kufen sowohl in Quer- als auch in Längsrichtung zum Saugrohr 2 ballig bzw. gerundet gestaltet sind.

Wie sich aus der Frontansicht nach Fig. 4 ergibt, sind die saugmündungsfern liegenden Düsen 30 und 32 unter einem flacheren Winkel 37 zur Bodenfläche 7 ausgerichtet als die saugmündungsnah liegenden Düsen 31 und 33, die unter einem Winkel 38 zur Bodenfläche 7 liegen. Fig. 4 kann auch entnommen werden, daß die bezogen auf die Mittelebene 14 sich paarweise gegenüberliegenden Düsen 30, 32; 31, 33 räumlich mit dem gleichen Winkel 37 bzw. 38 ausgerichtet liegen, so daß sich bezogen auf eine Mittelebene 14 ausgeglichene Reaktionskräfte ergeben. Die sich in der Mittelebene treffenden Blasströme erhalten eine Richtungskomponente nach oben.

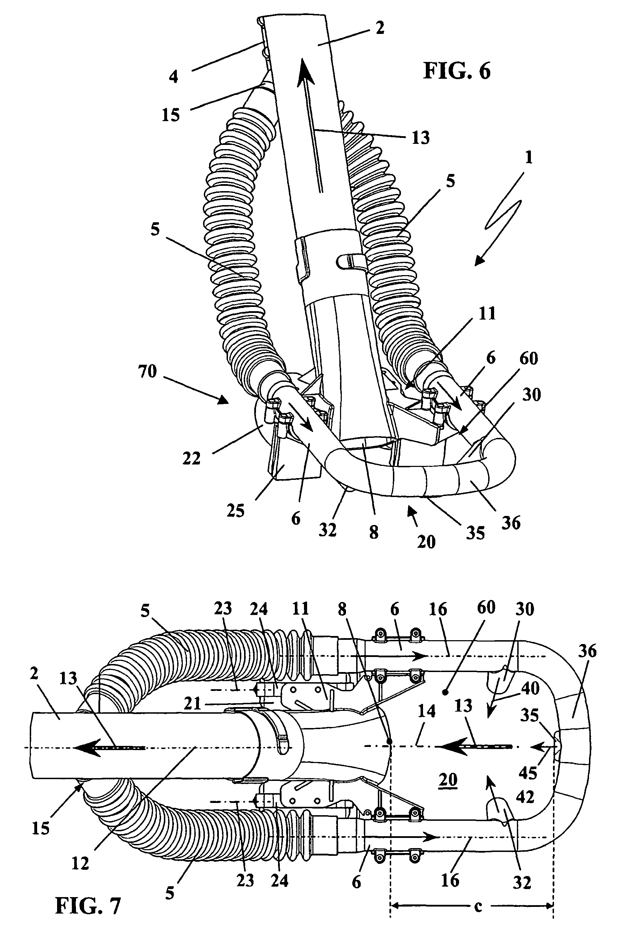

Das Ausführungsbeispiel nach den Fig. 6 und 7 entspricht im Grundaufbau dem Ausführungsbeispiel nach den Fig. 1 bis 5, weshalb für gleiche Teile gleiche Bezugszeichen verwendet sind.

In Abweichung von den Ausführungsbeispielen nach den Fig. 1 bis 5 sind die Endrohre 6 offen und über ein Verbindungsrohr 36 miteinander strömungsführend verbunden. Mittig zur Mittelebene 14 ist im Verbindungsrohr 36 eine Blasdüse 35 angeordnet, die der Saugmündung 8 - gemessen in der Horizontalen der Bodenfläche 7 - mit einem Abstand c direkt gegenüberliegt (Fig. 7). Der austretende Blasluftstrom 45 ist schräg abwärts auf die Bodenfläche im Arbeitsbereich 20 gerichtet, wobei der Blasluftstrom 45 eine Strömungskomponente aufweist, die direkt auf die Saugmündung 8 zeigt.

In den Endrohren 6 sind die nahe der Saugmündung 8 liegenden Blasdüsen 31 und 33 der Fig. 1 bis 5 entfallen; es kann aber zweckmäßig sein, auch bei der geschlossenen Gabeldüse nach dem Ausführungsbeispiel der Fig. 6 und 7 saugmündungsnahe Blasdüsen anzuordnen.

Auch wenn im Ausführungsbeispiel nach den Fig. 6 und 7 Laufrollen 21, 22 als Abstandshalter 70 zur Bodenfläche 7 gezeigt sind, können - wie im Ausführungsbeispiel nach den Fig. 4 und 5 - auch Gleiter, Kufen, Lappen oder dgl. Abstandshalter vorgesehen sein.

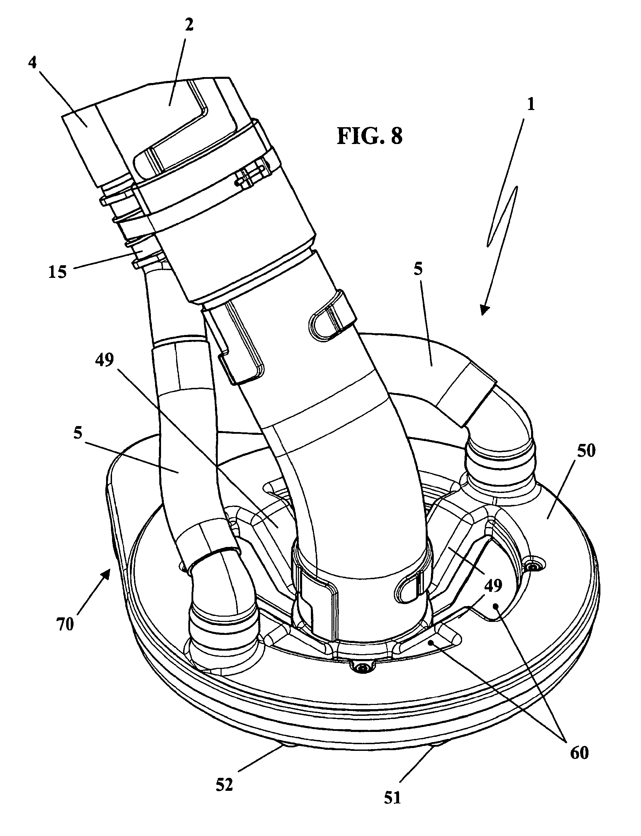

In einem dritten Ausführungsbeispiel der Erfindung ist eine Sauganordnung 1 als Ringdüse gezeigt, wie sie in den Fig. 8 bis 12 dargestellt ist. Die Ringdüse besteht aus einem vorzugsweise luftführenden Ring 50, in dessen Zentrum die Saugmündung 8 des Saugrohres 2 liegt. Die Saugmündung 8 ist über Radialstreben 49 gehalten, wobei zwischen den Radialstreben 49, dem Ring 50 und dem Blasrohr 2 Fenster 60 begrenzt sind, die offen sind. Der unter dem Ring 50 liegende Arbeitsbereich 20 ist erfindungsgemäß nach oben offen, so daß Laub, loses Gras, Moos oder Schmutz abströmen kann.

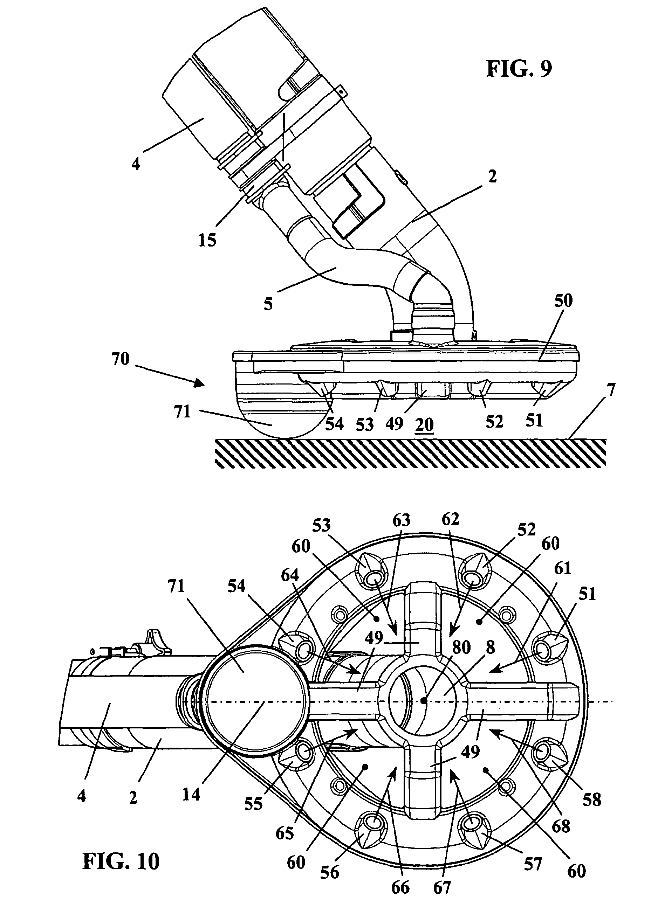

Auf der der Bodenfläche 7 zugewandten Seite des Rings 50 sind Blasdüsen 51 bis 58 (Fig. 10) vorgesehen, deren Blasluftströme 61 bis 68 schräg nach unten in Richtung auf das Zentrum des Rings 50 auf die Bodenfläche 7 gerichtet sind. Auch in dieser Ausführungsform ist vorgesehen, daß sich die Reaktionskräfte der auf die Bodenfläche 7 gerichteten Blasluftströme 61 bis 68 aufheben. Daher sind die zum Zentrum einander diametral gegenüberliegenden Blasluftdüsen gleich ausgebildet und gleich ausgerichtet, so daß bezogen auf das Zentrum 80 der Ringdüse auftretende Reaktionskräfte weitgehend aufgehoben sind. Die sich treffenden Blasströme werden nach oben gelenkt.

Die Blasluft wird auch im Ausführungsbeispiel nach den Fig. 8 bis 12 über ein Blasrohr 4 zugeführt, welches über ein T-Stück 15 in zwei Luftschläuche 5 verzweigt, die auf beiden Seiten der Mittelebene 14 in den luftführenden Ring 50 einmünden. Es kann zweckmäßig sein, die Luftschläuche 5 in der Wandung des Saugkanals 2 auszubilden und die Luftzuführung zum Ring 50 über die Radialstreben 49 auszuführen.

Am Ring 50 ist ein Abstandshalter 70 in Form einer Kugelkappe 71 ausgebildet, die in allen Bewegungsrichtungen der Ringdüse 50 als Gleitkufe dient. Die Kugelkappe 71 ist etwa unterhalb des Saugrohrs 2 am Ring 50 angeordnet und trägt das Gewicht der Sauganordnung 1.

Die Ringdüse 50 hat den Vorteil, daß die Lüftdüsen 51 bis 58 gezielt auf einen Arbeitsbereich 20 unterhalb der Saugmündung 8 ausgerichtet werden können. Das aufzusaugende Sammelgut wie Nüsse oder dgl. wird von den Blasluftströmen 61 bis 68 aus z.B. tiefem Gras zur Saugöffnung 8 angehoben, so daß eine sichere Aufnahme gewährleistet ist. Aufgrund der offenen Struktur der Ringdüse 50 mit offenen Fenster 60 zwischen den Streben 49 wird leichteres Gut wie Laub, Gras, Moos oder dgl. durch die zwischen den Streben 49 liegenden Fenster wegfliegen, so daß der Sammelbehälter mit einem guten Füllungsgrad mit dem Sammelgut gefüllt wird. Kreuzen sich die Luftströme 61 bis 68 unterhalb des Zentrums 80 der Saugmündung 8, wird eine gute Aufnahme des Sammelgutes erzielt. Selbst in Vertiefungen im Boden oder im Gras gehaltene Gegenstände werden gelöst und der Saugöffnung 8 zugeführt.

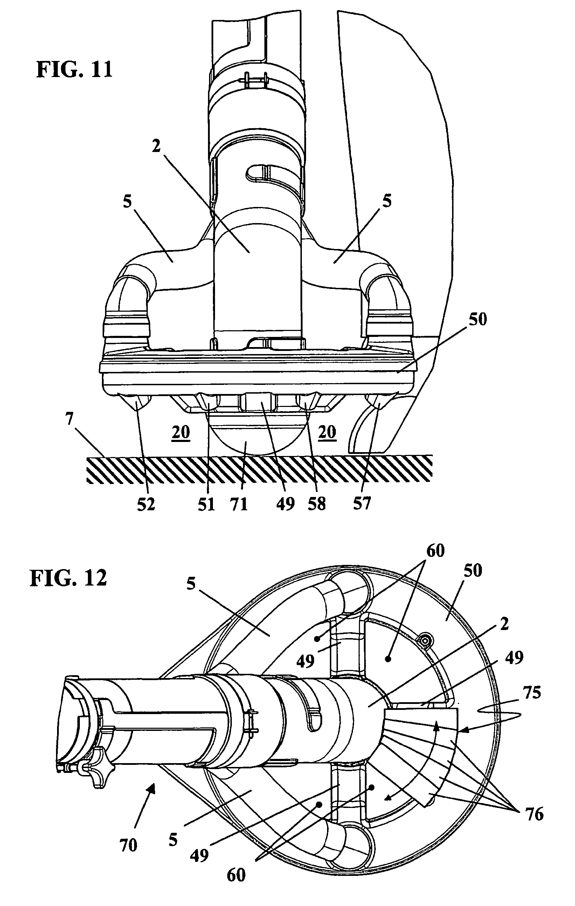

Vorteilhaft ist das von den Radialstreben 49 und dem Ring 50 begrenzte Fenster 60 durch ein Verschlußelement 75 ganz oder teilweise verschließbar (Fig. 12). Hierzu kann ein Schieber vorgesehen sein, der aus mehreren Einzellamellen 76 besteht, die ähnlich einem Fächer das Fenster 60 abdecken. Wird der Fächer vollständig ausgefahren, ist das Fenster 60 vollständig verschlossen. Werden alle Fenster auf diese Weise geschlossen, ist die Ebene der Sauganordnung oberhalb der Saugmündung 8 vollständig geschlossen, so daß das von den Blasluftströmen 60 bis 68 aufgewirbelte leichtere Sammelgut ebenfalls über die Saugmündung abgesaugt wird; die Sauganordnung bildet ein Saugreinigungsgerät. Dabei kann die zugeführte Blasluft im wesentlichen vollständig abgesaugt werden, so daß ein etwa geschlossener Luftkreislauf gegeben ist. Wird das Verschlußelement ganz oder teilweise in einem transparenten Material ausgeführt, ist die abzusaugende Fläche für den Benutzer einsehbar, so daß er die abzusaugende Fläche und das abzusaugende Gut optisch überwachen kann. Die Führung der Sauganordnung ist effizienter.

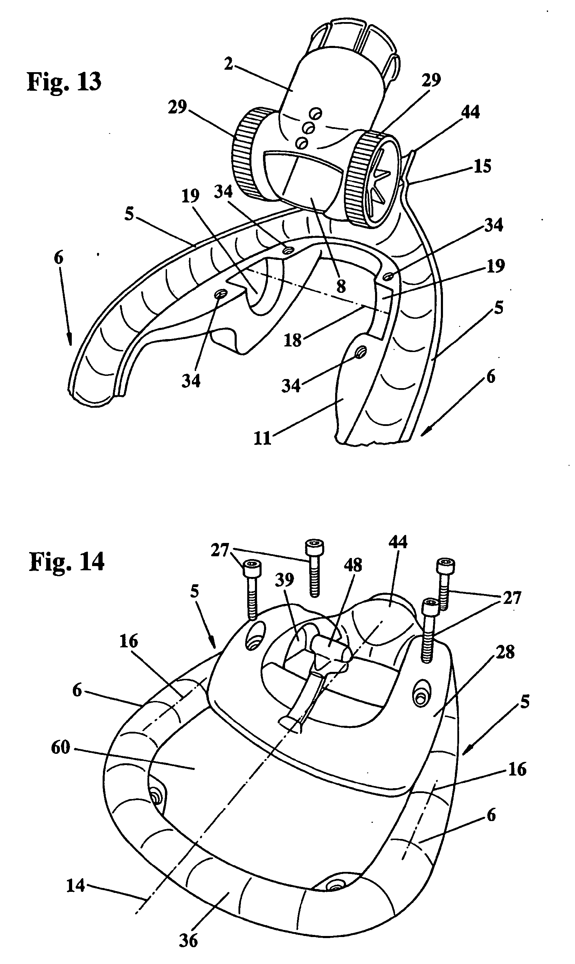

Das Ausführungsbeispiel nach den Fig. 13 und 14 zeigt eine verschwenkbare Befestigung des bodenseitigen Endes des Saugrohres 2 mit der Saugmündung 8 an dem Tragkörper 11. In dem gezeigten Ausführungsbeispiel ist der Tragkörper 11 vorzugsweise einteilig mit den zuführenden Blasluftkanälen 5 und den Endrohren 6 ausgeführt, die über ein Verbindungsrohr 36 miteinander blasluftführend verbunden sind. Der Tragkörper 11 weist einander gegenüberliegende Lageraufnahmen 19 auf, in welche Rundflansche 29 des Saugrohres 2 drehbar zu liegen kommen. Die Lageraufnahmen 19 bestimmen die Drehachse 18 des Saugrohres 2 im Tragkörper 11, um die die Rundflansche 29 zusammen mit dem Saugrohr 2 verschwenkbar sind. Die Drehachse 18 liegt etwa parallel zu der durch die Längsachsen 16 der Endrohre 6 bestimmten Ebene.

Nach Einsetzen der Rundflansche 29 in die Lageraufnahmen 19 wird die Anordnung durch einen Lagerdeckel 28 geschlossen, in dem Lageraufnahmen 39 ausgebildet sind. Die Lageraufnahmen 19 und 39 sind jeweils als Lagerhalbschalen gestaltet, so daß nach Aufsetzen des Lagerdeckels 28 die jeweiligen Lageraufnahmen vollständig geschlossen sind und die Rundflansche 29 des Saugrohres 2 umschließen. Der Lagerdeckel 28 wird durch Befestigungsschrauben 27 am Tragkörper 11 festgelegt, wozu im Tragkörper 11 entsprechende Schraublöcher 34 vorgesehen sind. Der Lagerdeckel 28 ist ferner mit einem Griff 48 versehen, über den der Benutzer nach Lockern der Befestigungsschrauben 27 die Verstellung des Tragkörpers 11 relativ zum Saugrohr 2 ausführen kann. Nach Anziehen der Befestigungsschrauben 27 ist das Saugrohr 2 im Tragkörper 11 in der eingestellten Drehlage drehfest fixiert.

Die einteilige Ausführung der Saugkanäle 5, der Endrohre 6 und des Verbindungsrohres 36 gibt die Möglichkeit, einen auf der Mittelebene 14 liegenden Blasluftstutzen 44 zum Anschluß des Blasrohres 4 auszubilden. Die Zuführung der Blasluft kann so etwa in der Mittelebene 14 zentral erfolgen. Das Saugrohr 2 und das Blasrohr 4 liegen - in Draufsicht gesehen - übereinander.

Als Antrieb für die erfindungsgemäße Sauganordnung 1 kann ein Sauggebläse dienen, wobei das Sauggebläse auf der Saugseite mit dem Saugrohr 2 und auf der Blasseite mit dem Blasrohr 4 verbunden werden kann. Um zu vermeiden, das Sammelgut durch das Sauggebläse zu saugen, kann der Saugluftstrom auch durch Injektion von Blasluft in das Saugrohr 2 generiert werden, so daß ausschließlich der Blasstrom eines Blasgerätes als Antrieb genutzt wird.

## Patentansprüche

1. Sauganordnung, zum Aufsammeln von Sammelgut von einer Bodenfläche (7), z. B. zur Aufnahme von Erntegut, nämlich Kleinfrüchten wie Kastanien, Nüssen, Beeren, Oliven oder dgl. vom Boden, mit einem zur Aufnahme und Weiterleitung des Sammelgutes in einen Sammelbehälter (3) vorgesehenen Saugrohr (2), dessen Saugmündung (8) der Bodenfläche (7) zugewandt liegt, und mit einem im Bereich der Saugmündung (8) liegenden Arbeitsbereich (20) der Sauganordnung (1) sowie einer Blasdüse (30 bis 33; 35; 51 bis 58), deren Blasluftstrom (40 bis 43, 45, 61 bis 68) zur Bodenfläche (7) gerichtet ist,
**dadurch gekennzeichnet, daß** mehrere Blasdüsen (30 bis 33; 35; 51 bis 58) vorgesehen sind, daß zum pneumatischen Anheben des Sammelgutes von der Bodenfläche (7) der aus einem Blasluftaustritt einer Blasdüse (30 bis 33; 35; 51 bis 58) austretende Blasluftstrom (40 bis 43, 45, 61 bis 68) auf die Bodenfläche (7) in den Arbeitsbereich (20) und zur Förderung des Sammelgutes in Richtung auf die Saugmündung (8) zumindest teilweise in Richtung auf die Saugmündung (8) ausgerichtet ist, wobei der Blasluftaustritt der Blasdüsen (30 bis 33; 35; 51 bis 58) und die Saugmündung (8) des Saugrohres (2) mit in der Horizontalen zur Bodenfläche (7) gemessenen Abständen (a, b, c) zueinander liegen, wobei sich bezogen auf den Arbeitsbereich (20) zwei Blasdüsen (30, 32; 31, 33; 51, 55; 52, 56; 53, 57; 54, 58) einander etwa gegenüberliegen.

2. Saugrohr nach Anspruch 1,
**dadurch gekennzeichnet, daß** der zwischen dem Blasluftaustritt und der Saugmündung (8) liegende Arbeitsbereich (20) zumindest über einen Teilbereich von oben einsehbar ist.

3. Sauganordnung nach Anspruch 1 oder 2,
**dadurch gekennzeichnet, daß** der zwischen dem Blasluftaustritt und der Saugmündung (8) liegende Arbeitsbereich (20) zumindest über einen Teilbereich nach oben offen ist.

4. Sauganordnung nach Anspruch 3,
**dadurch gekennzeichnet, daß** der offene Teilbereich über ein Verschlußelement (75), vorzugsweise einen Schieber, ganz oder teilweise verschließbar ist.

5. Sauganordnung nach Anspruch 4,
**dadurch gekennzeichnet, daß** das Verschlußelement (75), aus einem transparenten Material besteht.

6. Sauganordnung nach einem der Ansprüche 1 bis 5,
**dadurch gekennzeichnet, daß** der Saugmündung (8) eine Blasdüse (35) gegenüberliegt.

7. Sauganordnung nach einem der Ansprüche 1 bis 6,
**dadurch gekennzeichnet, daß** zwischen der Eintrittsebene (10) der Saugmündung (8) und der Bodenfläche (7) ein Winkel (9) von kleiner etwa 70°, vorzugsweise etwa 45° eingeschlossen ist.

8. Sauganordnung nach Anspruch 1,
**dadurch gekennzeichnet, daß** die Blasluftströme (40,42; 41,43; 61,65; 62,66; 63,67; 64,68) eines Paares vorzugsweise mit gleichen Winkeln (37, 38) zur Bodenfläche (7) ausgerichtet sind.

9. Sauganordnung nach einem der Ansprüche 1 bis 8,
**dadurch gekennzeichnet, daß** einige Blasluftdüsen mit unterschiedlichen Winkeln (37, 38) zur Bodenfläche (7) liegen.

10. Sauganordnung nach einem der Ansprüche 1 bis 9,
**dadurch gekennzeichnet, daß** mehrere Blasdüsen (51 bis 58) auf einem die Saugmündung (8) als Zentrum (80) aufweisenden, vorzugsweise luftführenden Ring (50) angeordnet sind.

11. Sauganordnung nach Anspruch 10,
**dadurch gekennzeichnet, daß** alle Blasdüsen (51 bis 58) des Ringes (50) unter einem gleichen Winkel zur Bodenfläche (7) liegen.

12. Sauganordnung nach einem der Ansprüche 8 bis 11,
**dadurch gekennzeichnet, daß** sich die Blasluftströme (40,42; 41,43; 61,65; 62,66; 63,67; 64,68) eines Paares kreuzen, vorzugsweise etwa auf einer Mittelebene (14) des Arbeitsbereiches (20) oder nahe dem Zentrum (80) der Saugmündung (8).

13. Sauganordnung nach einem der Ansprüche 1 bis 12,
**dadurch gekennzeichnet, daß** das Saugrohr (2) und die Blasdüsen (30 bis 33, 35, 51 bis 58) an einem gemeinsamen Tragkörper (11) gehalten sind und der Tragkörper (11) einen auf die Bodenfläche (7) aufsetzbaren Abstandshalter (70) aufweist.

14. Sauganordnung nach Anspruch 13,
**dadurch gekennzeichnet, daß** der Abstandshalter (70) aus einem Gleitkörper (26), insbesondere aus einer oder mehreren Gleitkufen gebildet ist.

15. Sauganordnung nach Anspruch 1,
**dadurch gekennzeichnet, daß** der Abstandshalter (70) eine Laufrolle (21, 22) ist, deren Drehachse (23) etwa parallel zur Bodenfläche (7) und vorzugsweise etwa parallel zum Saugrohr (2) liegt.

16. Sauganordnung nach Anspruch 15,
**dadurch gekennzeichnet, daß** die Laufrolle (21, 22) in Richtung der Drehachse (23) ballig gestaltet ist.

17. Sauganordnung nach Anspruch 13,
**dadurch gekennzeichnet, daß** der Abstandshalter (70) aus einem flexiblen Material, insbesondere aus Lappen (25) besteht.

18. Sauganordnung nach einem der Ansprüche 1 bis 17,
**dadurch gekennzeichnet, daß** die Blasluft volumenmäßig gleichmäßig auf beide Seiten einer Mittelebene (18) des Arbeitsbereichs (20) aufgeteilt ist.

19. Sauganordnung nach einem der Ansprüche 1 bis 18,
**dadurch gekennzeichnet, daß** der Winkel (17) zwischen dem Saugrohr (2) und der die Blasdüse (30,32; 31,33; 51,55; 52,56; 53,57; 54,58) aufweisenden Anordnung verstellbar ist.

## Claims

1. A suction device for collecting material from a soil surface (7), for example for picking up harvested material, namely small fruits such as chestnuts, walnuts, berries, olives, etc. from the soil, said suction device (1) having a suction pipe (2) provided for collecting the material and
transporting it to a collecting container (3) which has a suction mouth (8) located facing the soil surface (7), an operating area (20) located in the area of the suction mouth (8) and a blower nozzle (30 to 33; 35; 51 to 58) with a blower air flow (40 to 43, 45, 61 to 68) which is oriented towards the soil surface (7),
**characterised in that**
a plurality of blower nozzles (30 to 33; 35; 51 to 58) is provided, the blower air flow (40 to 43, 45, 61 to 68) flowing out of a blower air outlet of a blower nozzle (30 to 33; 35; 51 to 58) is oriented towards the soil surface (7) in the operating area (20) in order to pneumatically lift the material from the soil surface (7) and at least partially oriented towards the suction mouth (8) in order to transport the material towards the suction mouth (8), the blower air outlets of the blower nozzles (30 to 33; 35; 51 to 58) and the suction mouth (8) of the suction pipe (2) being located certain distances (a, b, c) measured horizontal to the soil surface (7) apart, two blower nozzles (30, 32; 31, 33; 51, 55; 52, 56; 53, 57; 54, 58) lying approximately opposite one another in relation to the operating area (20).

2. A suction pipe in accordance with claim 1,
**characterised in that**
it is possible to view at least part of the operating area (20) located between the blower nozzle outlets and the suction mouth (8) from above.

3. A suction device in accordance with claim 1 or 2,
**characterised in that**
at least part of the operating area (20) located between the blower nozzle outlets and the suction mouth (8) is open towards the top.

4. A suction device in accordance with claim 3,
**characterised in that**
the open part can be wholly or partially closed by means of a closing element, preferably a sliding element.

5. A suction device in accordance with claim 4,
**characterised in that**
the closing element (75) is made of a transparent material.

6. A suction device in accordance with one of claims 1 to 5,
**characterised in that**
the suction mouth (8) lies opposite a blower nozzle (35).

7. A suction device in accordance with one of claims 1 to 6,
**characterised in that**
an angle (9) of less than 70°C and preferably approximately 45° is included between the entry plane (10) of the suction mouth (8) and the soil surface (7).

8. A suction device in accordance with claim 1,
**characterised in that**
the blower air flows (40, 42; 41, 43; 61, 65; 62, 66; 63, 67; 64, 68) of a pair are preferably oriented at the same angle (37, 38) to the soil surface (7).

9. A suction device in accordance with one of claims 1 to 8,
**characterised in that**
some blower air nozzles lie at different angles (37, 38) to the soil surface (7).

10. A suction device in accordance with one of claims 1 to 9,
**characterised in that**
a plurality of blower nozzles (51 to 58) is positioned on a ring (50) which has the suction mouth (8) as its centre and is preferably air-conducting.

11. A suction device in accordance with claim 10,
**characterised in that**
all the blower nozzles (51 to 58) in the ring (50) lie at the same angle to the soil surface (7).

12. A suction device in accordance with one of claims 8 to 11,
**characterised in that**
the blower air flows (40, 42; 41, 43; 61, 65; 63, 67; 64, 68) of a pair intersect, preferably approximately in a central plane (14) of the operating area (20) or near to the centre (80) of the suction mouth (8).

13. A suction device in accordance with one of claims 1 to 12,
**characterised in that**
the suction pipe (2) and the blower nozzles (30 to 33, 35, 51 to 58) are mounted on a common supporting body (11) and said supporting body (11) has a spacer (70) which can be placed on the soil surface (7).

14. A suction device in accordance with claim 13,
**characterised in that**
the spacer (70) takes the form of a slider (26), in particular one or more sliding runners.

15. A suction device in accordance with claim 1,
**characterised in that**
the spacer (70) is a roller (21, 22) with an axis of rotation (23) approximately parallel to the soil surface (7) and preferably approximately parallel to the suction pipe (2).

16. A suction device in accordance with claim 15,
**characterised in that**
the roller (21, 22) is spherical in the direction of the axis of rotation (23).

17. A suction device in accordance with claim 13,
**characterised in that**
the spacer (70) consists of a flexible material, in particular of fabric tabs (25).

18. A suction device in accordance with one of claims 1 to 17,
**characterised in that**
the volume of blower air is divided equally on either side of a centre plane (18) of the operating area (20).

19. A suction device in accordance with one of claims 1 to 18,
**characterised in that**
the angle (17) between the suction pipe (2) and the arrangement containing the blower nozzle (30, 32; 31, 33; 51, 55; 52, 56; 53, 57; 54, 58) is adjustable.

## Revendications

1. Dispositif d'aspiration pour rassembler des matières en vrac sur une surface du sol (7), par exemple pour ramasser sur le sol des végétaux récoltés, à savoir de petits fruits, tels que des châtaignes, des noix, des baies, des olives ou végétaux similaires, comportant un tube d'aspiration (2), qui est prévu pour ramasser et transférer des matières en vrac dans un réservoir (3) et dont la bouche d'aspiration (8) est située en face de la surface du sol (7), et comportant une zone de travail (20) du dispositif d'aspiration (1), disposée dans la zone de la bouche d'aspiration (8), ainsi qu'une buse de soufflage (30 à 33 ; 35 ; 51 à 58), dont le flux d'air de soufflage (40 à 43, 45, 61 à 68) est orienté vers la surface du sol (7),
**caractérisé en ce que** plusieurs buses de soufflage (30 à 33 ; 35 ; 51 à 58) sont prévues, **en ce que** le flux d'air de soufflage (40 à 43, 45, 61 à 68) sortant d'un orifice d'évacuation d'air d'une buse de soufflage (30 à 33 ; 35 ; 51 à 58) est dirigé vers la surface du sol (7) dans la zone de travail (20) pour le ramassage pneumatique des matières en vrac sur la surface du sol (7), et est dirigé au moins en partie vers la bouche d'aspiration (8) pour le transfert des matières en vrac vers la bouche d'aspiration (8), sachant que l'orifice d'évacuation d'air des buses de soufflage (30 à 33 ; 35 ; 51 à 58) et la bouche d'aspiration (8) du tube d'aspiration (2) sont situés l'un de l'autre à des distances (a, b, c) mesurées dans l'horizontale par rapport à la surface du sol (7), deux buses de soufflage (30, 32 ; 31, 33 ; 51, 55 ; 52, 56 ; 53, 57 ; 54, 58) étant disposées sensiblement face à face par rapport à la zone de travail (20).

2. Dispositif d'aspiration selon la revendication 1, **caractérisé en ce que** la zone de travail (20), située entre l'orifice d'évacuation d'air et la bouche d'aspiration (8), est visible depuis le haut au moins dans une zone partielle.

3. Dispositif d'aspiration selon la revendication 1 ou 2, **caractérisé en ce que** la zone de travail (20), située entre l'orifice d'évacuation d'air et la bouche d'aspiration (8), est ouverte vers le haut au moins dans une zone partielle.

4. Dispositif d'aspiration selon la revendication 3, **caractérisé en ce que** la zone partielle ouverte peut être fermée totalement ou partiellement par l'intermédiaire d'un élément obturateur (75), de préférence un coulisseau.

5. Dispositif d'aspiration selon la revendication 4, **caractérisé en ce que** l'élément obturateur (75) est réalisé dans un matériau transparent.

6. Dispositif d'aspiration selon l'une quelconque des revendications 1 à 5, **caractérisé en ce qu'**une buse de soufflage (35) est située en face de la bouche d'aspiration (8).

7. Dispositif d'aspiration selon l'une quelconque des revendications 1 à 6, **caractérisé en ce qu'**un angle (9) inférieur à 70° environ, de préférence égal à 45° environ, est délimité entre le plan d'entrée (10) de la bouche d'aspiration (8) et la surface du sol (7).

8. Dispositif d'aspiration selon la revendication 1, **caractérisé en ce que** les flux d'air de soufflage (40, 42 ; 41, 43 ; 61, 65 ; 62, 66 ; 63, 67 ; 64, 68) d'une paire sont dirigés de préférence selon des angles (37, 38) identiques par rapport à la surface du sol (7).

9. Dispositif d'aspiration selon l'une quelconque des revendications 1 à 8, **caractérisé en ce que** quelques buses de soufflage sont disposées selon, des angles (37, 38) différents par rapport à la surface du sol (7).

10. Dispositif d'aspiration selon l'une quelconque des revendications 1 à 9, **caractérisé en ce que** plusieurs buses de soufflage (51 à 58) sont disposées sur un anneau (50), qui guide de préférence l'air et dont le centre (80) est formé par la bouche d'aspiration (8).

11. Dispositif d'aspiration selon la revendication 10, **caractérisé en ce que** toutes les buses de soufflage (51 à 58) de l'anneau (50) sont disposées selon un angle identique par rapport à la surface du sol (7).

12. Dispositif d'aspiration selon l'une quelconque des revendications 8 à 11, **caractérisé en ce que** les flux d'air de soufflage (40, 42 ; 41, 43 ; 61, 65 ; 62, 66 ; 63, 67 ; 64, 68) d'une paire se croisent, de préférence à peu près sur un plan médian (14) de la zone de travail (20) ou à proximité du centre (80) de la bouche d'aspiration (8).

13. Dispositif d'aspiration selon l'une quelconque des revendications 1 à 12, **caractérisé en ce que** le tube d'aspiration (2) et les buses de soufflage (30 à 33, 35, 51 à 58) sont maintenus sur un corps de support (11) commun, et le corps de support (11) comporte un écarteur (70) pouvant être posé sur la surface du sol (7).

14. Dispositif d'aspiration selon la revendication 13, **caractérisé en ce que** l'écarteur (70) est formé par un corps de glissement (26), en particulier par un ou plusieurs patins.

15. Dispositif d'aspiration selon la revendication 1, **caractérisé en ce que** l'écarteur (70) est un rouleau (21, 22), dont l'axe de rotation (23) est sensiblement parallèle à la surface du sol (7) et, de préférence, sensiblement parallèle au tube d'aspiration (2).

16. Dispositif d'aspiration selon la revendication 15, **caractérisé en ce que** le rouleau (21, 22) est réalisé sous forme bombée en direction de l'axe de rotation (23).

17. Dispositif d'aspiration selon la revendication 13, **caractérisé en ce que** l'écarteur (70) est réalisé dans un matériau flexible, en particulier par des pattes (25).

18. Dispositif d'aspiration selon l'une quelconque des revendications 1 à 17, **caractérisé en ce que** l'air de soufflage est réparti à volume régulier sur les deux côtés d'un plan médian (18) de la zone de travail (20).

19. Dispositif d'aspiration selon l'une quelconque des revendications 1 à 18, **caractérisé en ce que** l'angle (17) entre le tube d'aspiration (2) et le système muni des buses de soufflage (30, 32 ; 31, 33 ; 51, 55 ; 52, 56 ; 53, 57 ; 54, 58) est un angle réglable.
